# NEUE EUROPÄISCHE PATENTSCHRIFT

(11) **EP 3 568 603 B2**
(45) Veröffentlichungstag und Bekanntmachung des Hinweises auf die Entscheidung über den Einspruch: **30.09.2026**
(45) Hinweis auf die Patenterteilung: 26.05.2021
(21) Anmeldenummer: 17816845.6
(22) Anmeldetag: 18.12.2017
(51) Int. Cl.: F16D 3/223, B60K 17/22

(54) **WELLENVERBINDUNG**
SHAFT CONNECTION
ACCOUPLEMENT D'ARBRES

(30) Priorität: 10.01.2017 DE 102017100356
(43) Veröffentlichungstag der Anmeldung: 20.11.2019
(73) Patentinhaber: GKN Driveline Deutschland GmbH, 63073 Offenbach Am Main (DE)
(72) Erfinder: DMYTRYSZYN, Adam, 63110 Rodgau (DE)
(74) Vertreter: karo IP
(86) Internationale Anmeldenummer: PCT/EP2017/083309
(87) Internationale Veröffentlichungsnummer: WO 2018/130381

(56) Entgegenhaltungen:
- EP-A1- 2 105 621
- DE-A1- 102015 217 293
- JP-B2- 4 996 217
- US-A1- 2016 273 592
- US-B2- 9 303 695

## Beschreibung

Die vorliegende Erfindung betrifft eine Wellenverbindung, insbesondere für eine Längswellenanordnung eines Kraftfahrzeugs. Eine Längswellenanordnung erstreckt sich im Allgemeinen entlang einer Fahrzeuglängsachse um eine Antriebsseite des Kraftfahrzeugs mit einer Abtriebsseite des Kraftfahrzeugs zu verbinden. Die Längswellenanordnung wird regelmäßig zur Übertragung eines Drehmoments vom Antrieb (z. B. Motor und/oder Getriebe) zum Abtrieb (z. B. Differential, Achsgetriebe, Getriebe) des Kraftfahrzeugs eingesetzt. Bei Einbau des Antriebs im vorderen Bereich des Kraftfahrzeugs überträgt die Längswellenanordnung das Drehmoment auf die hinteren Räder, bzw. bei Anordnung des Antriebs im hinteren Bereich des Kraftfahrzeugs überträgt die Längswellenanordnung das Drehmoment auf die vorderen Räder.

Längswellenanordnungen stellen im Kraftfahrzeug eine steife Konstruktion dar, die insbesondere hinsichtlich ihres Crash-Verhaltens auszulegen ist. Ein wesentlicher Schwerpunkt bei der Auslegung von Längswellenanordnungen ist daher, dass keine Komponente der Längswellenanordnung sich derart aus der Längswellenanordnung löst, dass sie andere Fahrzeugbereiche durchdringen würde. So soll insbesondere vermieden werden, dass Teile der Längswellenanordnung in den Fahrgastinnenraum und/oder den Kraftstofftank eindringen, wodurch eine zusätzliche Verletzungsgefahr für Fahrzeuginsassen oder Brandgefahr durch austretenden Kraftstoff auftreten könnte. Weiterhin soll sichergestellt werden, dass die Längswellenanordnung während einer Verformung im Crashfall Verformungsenergie (nur) im beabsichtigen Maße, insbesondere kontinuierlich, aufnimmt.

Solche Längswellenanordnungen weisen zumindest eine erste Welle und eine zweite Welle auf, über die die Drehmomente des Antriebs des Kraftfahrzeuges übertragen werden. Die Längswellenanordnung kann dabei über Gleichlaufdrehgelenke an weitere Komponenten des Kraftahrzeuges angebunden sein, die bevorzugt über einen begrenzten Verschiebebereich in einer axialen Richtung verfügen. Durch den Verschiebebereich der Gleichlaufgelenke werden die im üblichen Betrieb der Längswellenanordnung auftretenden Bewegungen von einzelnen Komponenten der Längswellenanordnung oder des Kraftfahrzeuges in Längsrichtung des Fahrzeugs (die axiale Richtung) kompensiert. Zudem werden durch die Gleichlaufgelenke auch im Betrieb auftretende Verschränkungen der Längswellenanordnung gegenüber weiteren Komponenten des Kraftfahrzeuges durch Beugung der Gleichlaufgelenke ausgeglichen. Der Verschiebebereich und der Verschwenkbereich der Längswellenanordnung sind anwendungsspezifisch ausgelegt und beschränkt. Gerade im Automobilbereich kann beispielsweise von einem Verschiebebereich der Längswellenanordnung von (insgesamt) 20 mm bis 80 mm [Millimeter] ausgegangen werden. Im gleichen Anwendungsfall kann von einem Verschwenkbereich von 0° bis 4° bzw. sogar bis 8° [Winkelgrad] ausgegangen werden. Wird der Verschiebeweg eines Gleichlaufgelenks der Längswellenanordnung betrachtet, so ergibt sich hier beispielsweise für denselben Anwendungsfall ein Verschiebebereich des einen Gleichlaufgelenks von 10 mm bis 40 mm [Millimeter] .

Längswellenanordnungen der vorgenannten Art sind auf den jeweiligen Einsatzfall, insbesondere hinsichtlich der zu übertragenden Antriebskraft auszulegen. Weitere Parameter sind unter anderem: Baulänge der Längswellenanordnung, Platzangebot im Kraftfahrzeug, Gewicht des Kraftfahrzeuges, Crashanforderungen.

Aus der DE 10 2008 048 388 A1 ist eine Längswellenanordnung bekannt, bei der im Crashfall die erste Welle in die rohrförmige und entsprechend hohle zweite Welle eingeschoben und die Längswellenanordnung damit gestaucht wird.

Aus der EP 2 106 621 A1 ist eine Längswelle mit einem Gleichlaufgelenk bekannt. Bei einer Stauchung der Längswelle wird eine Dichtplatte der Längswelle durch den Käfig des Gleichlaufgelenks verschoben.

Aus der US 9303965 B2 ist eine Längswelle bekannt, bei der eine Stauchung der Längswelle gebremst werden kann.

Aus der DE 10 2015 217 293 A1 ist eine Kraftübertragungswelle bekannt, bei der zwei Wellen bei einer Stauchung der Kraftübertragungswelle ineinander verschiebbar sind.

Aufgabe der Erfindung ist es daher, die mit Bezug auf den Stand der Technik vorhandenen Probleme zumindest teilweise zu lösen und insbesondere eine Wellenverbindung bereitzustellen, die in einem Crash-Fall, insbesondere simuliert durch Fahrzeugcrashversuche bzw. Komponentencrashversuche der Längswellenanordnung bzw. der Wellenverbindung, ausgehend von einer im Betrieb der Wellenverbindung vorliegenden Ausgangslage, gestreckt und gestaucht werden kann, ohne dass die gegenseitige Führung der ersten Welle und der zweiten Welle aufgegeben wird. Die sowohl bei Stauchung und auch bei Streckung der Wellenverbindung gewährleistete Führung soll im Crash-Fall eine Auslenkung von einzelnen Komponenten der Längswellenanordnung verhindern.

Diese Aufgaben werden gelöst mit einer Wellenverbindung gemäß den Merkmalen des Patentanspruchs 1 und des Patentanspruchs 4. Weitere vorteilhafte Ausgestaltungen der Wellenverbindung sind in den abhängigen Patentansprüchen angegeben. Es ist darauf hinzuweisen, dass die in den abhängigen Patentansprüchen einzeln aufgeführten Merkmale in technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Wellenverbindung (insbesondere die einer Längswellenanordnung eines Kraftfahrzeugs) bei, zumindest aufweisend eine erste Welle mit einem ersten Ende und einem zweiten Ende und eine koaxial zu der ersten Welle angeordnete zweite Welle mit einem ersten Wellenende und einem zweiten Wellenende; wobei sich die Wellen entlang einer axialen Richtung erstrecken. Das erste Ende der ersten Welle bildet einen Hohlabschnitt; wobei das erste Wellenende der zweiten Welle einen ersten Zapfen mit einem Verschiebeabschnitt bildet; wobei sich zumindest in einer Ausgangslage der Wellenverbindung das erste Wellenende durch den Hohlabschnitt hindurch erstreckt und der Hohlabschnitt mit dem Verschiebeabschnitt entlang der axialen Richtung einen Führungsabschnitt und in einer Umfangsrichtung eine formschlüssige erste Verbindung ausbildet. In der Ausgangslage, die insbesondere bei dem Betrieb der Wellenverbindung in einer Einbausituation, z. B. als Teil einer Längswellenanordnung in einem Kraftfahrzeug oder auf einem Prüfstand, vorliegt, ist eine gegenseitige Verschiebung von erster Welle und zweiter Welle entlang der axialen Richtung durch eine Axialsicherung verhindert. In einem (tatsächlichen oder nur simulierten) Crashfall ist die Axialsicherung durch eine in der axialen Richtung wirkende Auslösekraft lösbar und die erste Welle gegenüber der zweiten Welle entlang der axialen Richtung verschiebbar. Ausgehend von der Ausgangslage ist eine Führung durch den Führungsabschnitt sowohl bei einer Streckung als auch bei einer Stauchung der Wellenverbindung gewährleistet.

Insbesondere kann so bei einem Fahrzeugcrash, bei dem zunächst, ausgehend von der Ausgangslage, eine Streckung (also Verlängerung in der axialen Richtung) der Wellenverbindung und erst dann eine Stauchung (also Verkürzung in der axialen Richtung) der Wellenverbindung erfolgt, eine Auslenkung der Wellen durch die Aufrechterhaltung der gegenseitigen Führung der Wellen verhindert werden.

Die Streckung erfolgt insbesondere durch eine Verlagerung der im Bereich des Vorderwagens angeordneten Motor-Getriebe-Einheit in Fahrtrichtung in Folge eines Crashfalls. Diese Verlagerung kann z. B. durch eine weiche Motoraufhängung ermöglicht werden. Im Crashfall wird die Motor-Getriebe-Einheit aufgrund der weichen Aufhängung also zunächst nach vorne verlagert, während eine Anbindung der Längswellenanordnung z. B. an eine Hinterachse nahezu starr ist, so dass sich die Längswellenanordnung streckt. Erst nach dieser Streckung erfolgt nun die Stauchung, während der die gegenseitige Führung der Wellen ebenfalls gewährleistet werden soll.

Bevorzugt ist die Längswellenanordnung im Wesentlichen parallel zu einer Fahrzeuglängsachse eines Kraftfahrzeuges angeordnet, wobei Abweichungen von weniger als 10 Winkelgrad davon umfasst sind.

Insbesondere ist, jeweils ausgehend von der Ausgangslage, sowohl bei der Streckung als auch bei der Stauchung der Wellenverbindung die formschlüssige erste Verbindung zumindest über einen Weg von 20 Millimetern, bevorzugt von 30 Millimetern, gewährleistet. Insbesondere ist die formschlüssige erste Verbindung bei einer Streckung, ausgehend von der Ausgangslage zumindest bei der Streckung über einen Weg von mindestens 60 Millimetern, insbesondere von mindestens 80 Millimetern gewährleistet.

Insbesondere weist die (gegenüber der Umfangsrichtung) formschlüssige erste Verbindung in der Ausgangslage eine Länge in der axialen Richtung auf, wobei bei einer Streckung der Wellenverbindung um eine Verschiebung von zumindest 20 Millimetern über den Verschiebeabschnitt gewährleistet ist, dass die Länge der ersten Verbindung zumindest zu 20 % der Länge aufrechterhalten bleibt.

Insbesondere erstreckt sich der Verschiebeabschnitt in der axialen Richtung länger als der Hohlabschnitt, so dass zumindest bei einer Streckung, ggf. auch bei einer Stauchung der Wellenverbindung, der Verschiebeabschnitt die in der Ausgangslage vorliegende Länge der ersten Verbindung gewährleisten kann. Insbesondere beträgt eine Erstreckung des Verschiebeabschnitts (und insbesondere eine Erstreckung der daran ausgebildeten Profilierung zur Herstellung der ersten Verbindung) entlang der axialen Richtung mindestens 120 %, bevorzugt mindestens 150 % der Erstreckung des Hohlabschnitts (und insbesondere eine Erstreckung der daran ausgebildeten Profilierung zur Herstellung der ersten Verbindung).

Bevorzugt weist die formschlüssige erste Verbindung in der Ausgangslage eine Länge in der axialen Richtung auf. Insbesondere wird bei einer Streckung der Wellenverbindung der Verschiebeabschnitt zumindest teilweise aus dem Hohlabschnitt herausbewegt. Dabei soll nun insbesondere durch den Verschiebeabschnitt, der sich entlang der axialen Richtung insbesondere über eine größere Länge erstreckt als der Hohlabschnitt, zumindest bei einer Streckung der Wellenverbindung die formschlüssige erste Verbindung aufrechterhalten werden. Insbesondere soll über den Verschiebeabschnitt gewährleistet sein, dass die in der Ausgangslage vorliegende Länge der formschlüssigen ersten Verbindung zumindest bei einer Streckung (ggf. auch bei einer Stauchung) der Wellenverbindung um eine Verschiebung von zumindest 20 Millimeter, bevorzugt zumindest 30 Millimeter, besonders bevorzugt zumindest 60 Millimeter oder sogar zumindest 80 Millimeter, ausgehend von der Ausgangslage, aufrechterhalten bleibt oder zumindest zu 20 % der Länge, insbesondere zumindest zu 50 % der Länge, bevorzugt zumindest zu 75 % oder sogar zumindest zu 90 % der Länge, aufrechterhalten bleibt. Formschlüssige Verbindungen entstehen durch das Ineinandergreifen von mindestens zwei Verbindungspartnern. Dadurch können sich die Verbindungspartner auch ohne oder bei unterbrochener Kraftübertragung nicht lösen. Anders ausgedrückt ist bei einer formschlüssigen Verbindung der eine Verbindungspartner dem anderen im Weg.

Insbesondere ist die formschlüssige erste Verbindung durch eine Keilverzahnung an dem Verschiebeabschnitt und an dem Hohlabschnitt gebildet.

Bevorzugt weist die zweite Welle, ausgehend von dem Verschiebeabschnitt und hin zu dem zweiten Wellenende, einen sich entlang der axialen Richtung erstreckenden Zapfenabschnitt auf, wobei ein größter Durchmesser des Zapfenabschnitts kleiner ist als ein kleinster Durchmesser des Hohlabschnitts. Insbesondere erstreckt sich der Zapfenabschnitt über eine Länge entlang der axialen Richtung von mindestens 20 Millimetern, bevorzugt von mindestens 40 Millimetern, besonders bevorzugt von mindestens 100 Millimetern.

Insbesondere unterscheidet sich der größte Durchmesser des Zapfenabschnitts von dem kleinsten Durchmesser des Hohlabschnitts um höchstens 2 %, bevorzugt um höchstens 1 %. Insbesondere zeichnet sich der Zapfenabschnitt dadurch aus, dass er einen derart definierten größten Durchmesser aufweist.

Diese Ausgestaltung des Zapfenabschnitts ermöglicht es, dass die zweite Welle weiter in die erste Welle eingeschoben werden kann, so dass der Hohlabschnitt mit dem Zapfenabschnitt eine gegenseitige Führung der Wellen gewährleistet. Insbesondere wird so bei einer weiteren Stauchung der Wellenverbindung, auch wenn die formschlüssige erste Verbindung nicht mehr vorliegt, weiterhin eine gegenseitige Führung der ersten Welle und der zweite Welle gewährleistet. Insbesondere weist die zweite Welle im Bereich des ersten Wellenendes einen Anschlag auf, der mit der ersten Welle, insbesondere mit einem zweiten Hohlabschnittsende der ersten Welle, zur Begrenzung der gegenseitigen Verschiebung bei einer Streckung der Wellenverbindung zusammenwirkt. Bei einer Streckung der Wellenverbindung begrenzt der Anschlag an der zweiten Welle zusammen mit der ersten Welle eine weitere Streckung der Wellenverbindung. Insbesondere wird so verhindert, dass die zweite Welle aus dem Hohlabschnitt der ersten Welle vollständig entfernt werden kann. Bevorzugt wird so auch verhindert, dass die formschlüssige erste Verbindung bei einer Streckung aufgelöst werden kann.

Der Anschlag wird insbesondere durch einen Anschlagdurchmesser gebildet, der größer ist als der kleinste Durchmesser des Hohlabschnitts bzw. größer ist als ein kleinster Durchmesser der ersten Welle im Bereich des zweiten Hohlabschnittsendes.

Insbesondere ist zum Zusammenbau der Wellenverbindung gewährleistet (durch eine entsprechende Auswahl der betroffenen Durchmesser der ersten Welle und der zweiten Welle), dass die erste Welle über das zweite Wellenende der zweiten Welle auf die zweite Welle aufgeschoben werden kann.

Bevorzugt ist an dem zweiten Wellenende der zweiten Welle ein Gleichlaufgelenk angeordnet mit einem Gelenkinnenteil, einem Gelenkaußenteil und dazwischen angeordneten Rollkörpern, die im Betrieb der Längswellenanordnung in einer Funktionslage zueinander angeordnet sind; wobei eine für das Lösen der Axialsicherung erforderliche Auslösekraft geringer ist als eine Kraft, die für eine Auflösung der Funktionslage erforderlich ist.

Die Funktionslage ist eine Anordnung der genannten Komponenten des Gleichlaufgelenks in einer Lage zueinander, in der die vorgesehene Funktion des Gleichlaufgelenks (also Übertragung von Drehmomenten bei Gleichlauf der über das Gleichlaufgelenk verbundenen Wellen, ggf. unter Abbeugung; ggf. axiale Verschiebung von Gelenkinnenteil gegenüber Gelenkaußenteil, wenn das Gleichlaufgelenk ein Gleichlaufverschiebegelenk ist) gegeben ist. Insbesondere liegt die Funktionslage nicht vor, wenn die Komponenten z. B. im Falle eines Crashs aus dieser Lage herausbewegt wurden und z. B. ein Gleichlauf der über das Gleichlaufgelenk verbundenen Wellen (bei Abbeugung der Wellen) nicht mehr gewährleistet ist.

Insbesondere ist die Wellenverbindung so ausgelegt, dass im Crash-Fall zunächst die Axialsicherung gelöst wird und erst dann eine Auflösung der Funktionslage des Gleichlaufgelenks erfolgt. Damit kann gerade bei einer Streckung der Wellenverbindung und auch bei einer Stauchung die gegenseitige Führung der Wellen gewährleitet werden, ohne dass die vorgesehenen Gleichlaufgelenke mit einer entsprechenden Verschiebbarkeit ausgestattet sein müssen.

Gemäß einer bevorzugten Ausgestaltung der Wellenverbindung umfasst die Axialsicherung einen elastisch verformbaren Sicherungsring, der in der Ausgangslage in einer, in dem Hohlabschnitt angeordneten (in der Umfangsrichtung umlaufend ausgeführten) ersten Nut und in einer, in dem Verschiebeabschnitt angeordneten (in der Umfangsrichtung umlaufend ausgeführten) zweiten Nut positioniert ist, so dass der Sicherungsring in der axialen Richtung eine formschlüssige zweite Verbindung der ersten Welle mit der zweiten Welle bildet.

Insbesondere wird der Sicherungsring bei Montage der zweiten Welle in der ersten Welle in der zweiten Nut angeordnet und dann mit dem Verschiebeabschnitt in den Hohlabschnitt eingeführt. Dabei wird der Sicherungsring elastisch verformt und gleitet entlang der inneren Umfangsfläche des Hohlabschnitts bis die Ausgangslage erreicht ist. In dieser Position der Wellen zueinander verformt sich der Sicherungsring zurück und ordnet sich nun zusätzlich in der ersten Nut an, so dass eine formschlüssige zweite Verbindung der Wellen gebildet ist.

Insbesondere erstreckt sich der Hohlabschnitt, ausgehend von dem ersten Ende der ersten Welle und hin zu dem zweiten Ende entlang der axialen Richtung von einem ersten Hohlabschnittsende zu einem zweiten Hohlabschnittsende, wobei die erste Nut an dem zweiten Hohlabschnittsende angeordnet ist; insbesondere in einem Abstand von höchstens 5 Millimetern von dem zweiten Hohlabschnittsende.

Insbesondere erstreckt sich der Hohlabschnitt, ausgehend von dem ersten Ende der ersten Welle und hin zu dem zweiten Ende entlang der axialen Richtung von einem ersten Hohlabschnittsende zu einem zweiten Hohlabschnittsende, wobei ein Dichtring an dem ersten Hohlabschnittsende angeordnet ist, wobei der Dichtring in der Ausgangslage zusammen mit der zweiten Welle eine Abdichtung der ersten Welle bewirkt. Insbesondere ist der Dichtring ein bekannter O-Ring.

Bevorzugt ist der Dichtring in einer, in dem Verschiebeabschnitt angeordneten dritten Nut positioniert.

Insbesondere ist die erste Welle eine Hohlwelle mit einem sich an den Hohlabschnitt anschließenden Hohlraum, wobei sich die zweite Welle bei einer Stauchung der Wellenverbindung in den Hohlraum hinein erstreckt.

Insbesondere weist die Axialsicherung gegenüber einer Stauchung der Wellenverbindung eine Auslösekraft von höchstens 30.000 Newton, bevorzugt höchstens 20.000 Newton auf.

Bevorzugt weist die Axialsicherung gegenüber einer Streckung der Wellenverbindung eine Auslösekraft von höchstens 120.000 Newton, besonders bevorzugt höchstens 100.000 Newton auf.

Die vorgeschlagene Wellenverbindung für eine Längswellenanordnung erlaubt eine Streckung der Längswellenanordnung ohne dass die an den Enden der Längswellenanordnung insbesondere angeordneten Gleichlaufgelenke beschädigt werden und ihre Führungsfunktion gegenüber den Wellen verlieren. Eine dynamische Auslösekraft für die Streckung weist insbesondere eine Impulsenergie von 10 bis 1.000 Joule, bevorzug von höchstens 100 Joule und besonders bevorzugt von 20 Joule bis 50 Joule auf, wobei eine derartige Impulsenergie z. B. bei einem Crash-Fall vorliegt. Dabei sollte die erzeugte Kraftspitze insbesondere niedriger sein als die Bruchkraft des jeweiligen Gelenks (also insbesondere kleiner als 30.000 Newton bzw. kleiner als 120.000 Newton). Durch diese Auslösekraft wird die Axialsicherung gelöst und insbesondere gerade nicht eine Komponente des Gelenks (z. B. der Käfig) geschädigt. Damit ist anschließend (an die Streckung) insbesondere eine kontrollierte Stauchung der Längswellenanordnung möglich, wobei hier die Auslösekraft für die Stauchung nicht mehr mit einer Axialsicherung zusammenhängt (da die Axialsicherung in diesem Fall bereits bei der Streckung überwunden wurde).

Es wird weiter eine Längswellenanordnung für ein Kraftfahrzeug vorgeschlagen, zumindest aufweisend eine erste Welle und eine zweite Welle, die (genau) eine vorgeschlagene Wellenverbindung bilden. Ausgehend von der Ausgangslage ist eine Führung durch den Führungsabschnitt der Wellenverbindung im Crash-Fall sowohl bei einer Streckung als auch bei einer Stauchung der Wellenverbindung gewährleistet.

Insbesondere ist die erste Welle auch an dem zweiten Ende der ersten Welle der Längswellenanordnung über eine Wellenverbindung mit einer weiteren zweiten Welle verbunden. Die obigen Ausführungen zur Wellenverbindung gelten hier gleichermaßen, insbesondere auch für die weitere zweite Welle.

Im Crash-Fall, insbesondere im Rahmen eines Crashversuches des Kraftfahrzeuges oder nur einzelner Komponenten, bevorzugt bei einem Frontalcrash (EURO NCAP, US-NCAP, IIHS, FMVSS 208), durch den die Längswellenanordnung in der axialen Richtung gestaucht (verkürzt) wird, wird zunächst der ggf. vorliegende Verschiebeweg des Gleichlaufgelenks bzw. der Gleichlaufgelenke zunächst vollständig ausgenutzt, so dass alle Komponenten der Längswellenanordnung unzerstört und funktionsfähig bleiben. Bei weiterer Stauchung der Längswellenanordnung wird bei Erreichen einer Auslösekraft die Axialsicherung der Wellenverbindung gelöst und es erfolgt ein Verschieben der Wellen ineinander.

Das Crash-Verhalten der Längswellenanordnung wird somit bevorzugt vorrangig durch eine Auslösekraft eingestellt, bei der die Lösung der Axialsicherung erfolgt und eine gegenseitige Verschiebung von erster Welle und zweiter Welle eintritt. Im Crash-Fall, insbesondere bei Kraftfahrzeugen, kann so in Abhängigkeit von einer auftretenden Crash-Kraft eine definierte und vorbestimmte Verformung der Längswellenanordnung eingestellt werden.

Die Ausführungen zu der Wellenverbindung sind auf die Längswellenanordnung übertragbar und umgekehrt.

Die eingangs gestellten Aufgaben werden weiter durch ein Kraftfahrzeug mit einer hier vorgeschlagenen Längswellenanordnung gelöst.

Vorsorglich sei angemerkt, dass die hier verwendeten Zahlwörter ("erste", "zweite", "dritte", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: eine Ausführungsform einer Längswellenanordnung;
- Fig. 2:: eine bekannte Ausführungsform einer Wellenverbindung in einer Seitenansicht im Schnitt;
- Fig. 3:: eine Ausführungsform einer Wellenverbindung in einer Ausgangslage in einer Seitenansicht im Schnitt;
- Fig. 4:: die Wellenverbindung nach Fig. 3 in einer gegenüber der Ausgangslage gestreckten Anordnung in einer Seitenansicht im Schnitt;
- Fig. 5:: die Wellenverbindung nach Fig. 3 in einer gegenüber der Ausgangslage gestauchten Anordnung in einer Seitenansicht im Schnitt;
- Fig. 6:: eine weitere Ausführungsform einer Längswellenanordnung;
- Fig. 7:: die weitere Ausführungsform einer Wellenverbindung gemäß Fig. 6 in einer Ausgangslage in einer Seitenansicht im Schnitt;
- Fig. 8:: die weitere Wellenverbindung nach Fig. 7 in einer gegenüber der Ausgangslage gestreckten Anordnung in einer Seitenansicht im Schnitt; und
- Fig. 9:: die weitere Wellenverbindung nach Fig. 7 in einer gegenüber der Ausgangslage gestauchten Anordnung in einer Seitenansicht im Schnitt.

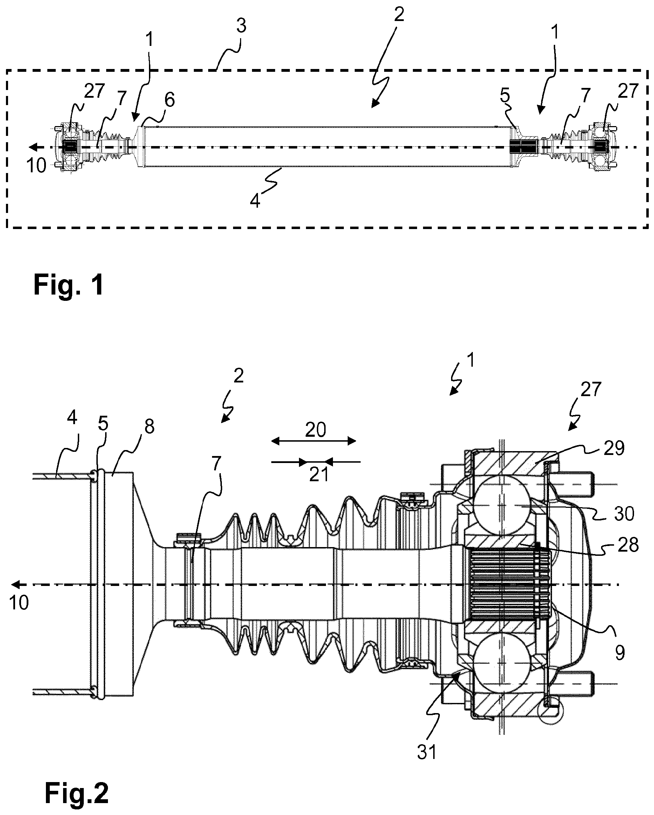

Figur 1 zeigt eine bevorzugte Ausführungsform einer Längswellenanordnung 2 eines Kraftfahrzeugs 3. Die Anordnung der Längswellenanordnung 2 im Kraftfahrzeug 3 erfolgt parallel zur Fahrtrichtung des Kraftfahrzeugs 3, also parallel zur axialen Richtung 10. Die Längswellenanordnung 2 setzt sich hier aus einer ersten Welle 4, die ein erstes Ende 5 und ein zweites Ende 6 aufweist, und zwei zweiten Wellen 7 zusammen, über die die Drehmomente des Antriebs des Kraftfahrzeuges 3 übertragen werden. Erste Welle 4 und zweite Welle 7 bilden jeweils eine starre Wellenverbindung 1. Die Längswellenanordnung 2 wird dabei über Gleichlaufdrehgelenke 27 an weitere Komponenten des Kraftahrzeuges 3 angebunden, wobei die Gleichlaufdrehgelenke 27 über einen begrenzten Verschiebebereich in der axialen Richtung 10 verfügen. Durch den Verschiebebereich der Gleichlaufdrehgelenke 27 werden die im üblichen Betrieb der Längswellenanordnung 2 auftretenden Bewegungen von einzelnen Komponenten der Längswellenanordnung 2 oder des Kraftfahrzeuges 3 in Längsrichtung des Kraftfahrzeugs (die axiale Richtung 10) kompensiert. Zudem werden durch die Gleichlaufdrehgelenke 27 auch im Betrieb auftretende Verschränkungen der Längswellenanordnung 2 gegenüber weiteren Komponenten des Kraftfahrzeuges 3 durch Beugung der Gleichlaufgelenke 27 ausgeglichen.

Fig. 2 zeigt eine bekannte Ausführungsform einer starren Wellenverbindung 1 in einer Seitenansicht im Schnitt. Die Wellenverbindung 1 umfasst eine erste Welle 4 mit einem ersten Ende 5 und einem zweiten Ende 6 und eine koaxial zu der ersten Welle 4 angeordnete zweite Welle 7 mit einem ersten Wellenende 8 und einem zweiten Wellenende 9; wobei sich die Wellen 4, 7 entlang einer axialen Richtung 10 erstrecken. Das erste Ende 5 der ersten Welle 4 ist mit dem ersten Wellenende 8 der zweiten Welle 7 über eine Reibschweißverbindung stoffschlüssig verbunden.

An dem zweiten Wellenende 9 der zweiten Welle 7 ist ein Gleichlaufdrehgelenk 27 angeordnet mit einem Gelenkinnenteil 28, einem Gelenkaußenteil 29 und dazwischen angeordneten Rollkörpern 30, die im Betrieb der Längswellenanordnung 2 in einer Funktionslage 31 (hier dargestellt) zueinander angeordnet sind. Die Funktionslage 31 ist eine Anordnung der genannten Komponenten des Gleichlaufdrehgelenks 27 in einer Lage zueinander, in der die vorgesehe Funktion des Gleichlaufdrehgelenks 27 (also Übertragung von Drehmomenten bei Gleichlauf der über das Gleichlaufdrehgelenk 27 verbundenen Wellen, ggf. unter Abbeugung; hier axiale Verschiebung von Gelenkinnenteil 28 gegenüber Gelenkaußenteil 29 entlang der axialen Richtung 10, weil das Gleichlaufdrehgelenk 27 ein Gleichlaufverschiebegelenk ist) gegeben ist. Die Funktionslage 31 liegt nicht vor, wenn die Komponenten z. B. im Falle eines Crashs aus dieser Lage herausbewegt wurden und z. B. ein Gleichlauf der über das Gleichlaufdrehgelenk 27 verbundenen Wellen (hier Gelenkaußenteil 29 und Gelenkinnenteil 28) gerade bei Abbeugung der Wellen nicht mehr gewährleistet ist.

Im Crashfall, durch den die Längswellenanordnung 2 bzw. die Wellenverbindung 1 in der axialen Richtung 10 gestaucht (verkürzt) wird (Stauchung 21), wird zunächst der Verschiebeweg des Gleichlaufdrehgelenks 27 zunächst vollständig ausgenutzt, so dass alle Komponenten der Längswellenanordnung 2 unzerstört und funktionsfähig bleiben. Bei weiterer Stauchung der Längswellenanordnung 2 bzw. der Wellenverbindung werden die erste Welle 4 bzw. die zweite Welle 7 verformt, wobei ein gegenseitige Führung der Wellen 4, 7 nicht gewährleistet ist. Weiterhin ist eine Streckung 20 der Wellenverbindung 1 nicht möglich, ohne dass eine gegenseitige Führung der Wellen 4, 7 (Gelenkaußenteil 29), hier nach Überschreiten des Verschiebewegs des Gleichlauf(verschiebe)gelenks 27, aufgegeben wird.

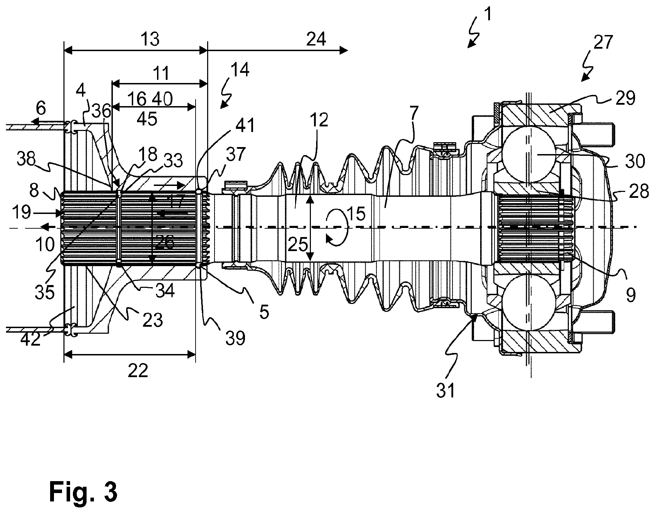

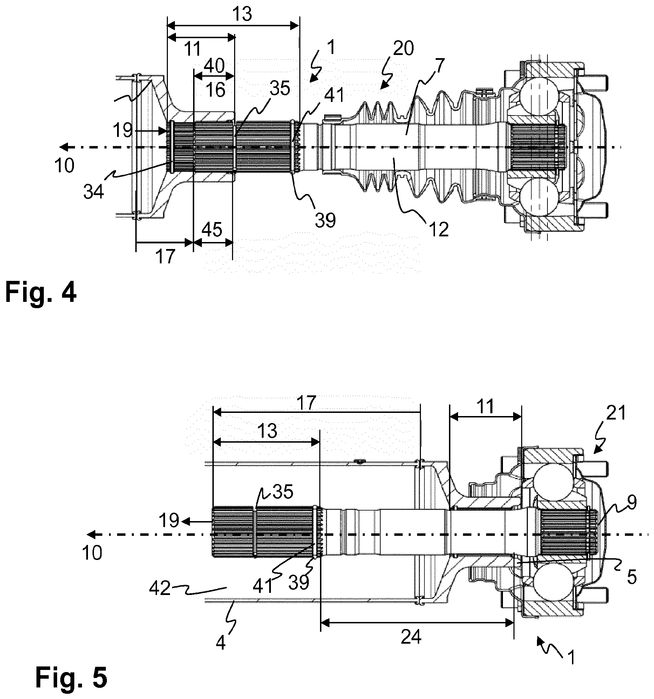

Fig. 3 zeigt eine Ausführungsform einer Wellenverbindung 1 in einer Ausgangslage 14 in einer Seitenansicht im Schnitt. Die Wellenverbindung 1 weist eine erste Welle 4 mit einem ersten Ende 5 und einem zweiten Ende 6 und eine koaxial zu der ersten Welle 4 angeordnete zweite Welle 7 mit einem ersten Wellenende 8 und einem zweiten Wellenende 9 auf, wobei sich die Wellen 4, 7 entlang einer axialen Richtung 10 erstrecken. Das erste Ende 5 der ersten Welle 4 bildet einen Hohlabschnitt 11, wobei das erste Wellenende 8 der zweiten Welle 7 einen ersten Zapfen 12 bildet mit einem Verschiebeabschnitt 13. Zumindest in einer Ausgangslage 14 der Wellenverbindung 1 erstreckt sich das erste Wellenende 8 durch den Hohlabschnitt 11 hindurch und bildet der Hohlabschnitt 11 mit dem Verschiebeabschnitt 13 entlang der axialen Richtung 10 einen Führungsabschnitt 40 und in einer Umfangsrichtung 15 eine formschlüssige erste Verbindung 16 aus. In der Ausgangslage 14, die bei dem Betrieb der Wellenverbindung 1 in einer Einbausituation, z. B. als Teil einer Längswellenanordnung 2 in einem Kraftfahrzeug 3 oder auf einem Prüfstand vorliegt, ist eine gegenseitige Verschiebung 17 von erster Welle 4 und zweiter Welle 7 entlang der axialen Richtung 10 durch eine Axialsicherung 18 verhindert. In einem (tatsächlichen oder nur simulierten) Crashfall ist die Axialsicherung 18 durch eine in der axialen Richtung 10 wirkende Auslösekraft 19 (siehe Fig. 4 und 5) lösbar und die erste Welle 4 gegenüber der zweiten Welle 7 entlang der axialen Richtung 10 verschiebbar. Ausgehend von der Ausgangslage 14 ist eine Führung durch den Führungsabschnitt 40 sowohl bei einer Streckung 20 (siehe Fig. 4) als auch bei einer Stauchung 21 (siehe Fig. 5) der Wellenverbindung 1 gewährleistet.

Ausgehend von der Ausgangslage 14 ist sowohl bei der Streckung 20 als auch bei der Stauchung 21 der Wellenverbindung 1 die formschlüssige erste Verbindung 16 über einen Weg 22 (zumindest teilweise) gewährleistet. Die formschlüssige erste Verbindung 16 ist durch eine an dem Verschiebeabschnitt 13 und an dem Hohlabschnitt 11 ausgebildete Keilverzahnung 23 gebildet.

Die zweite Welle 7 weist ausgehend von dem Verschiebeabschnitt 13 und hin zu dem zweiten Wellenende 9 einen sich entlang der axialen Richtung 10 erstreckenden Zapfenabschnitt 24 auf, wobei ein größter Durchmesser 25 des Zapfenabschnitts 24 kleiner ist als ein kleinster Durchmesser 26 des Hohlabschnitts 11. Diese Ausgestaltung des Zapfenabschnitts 24 ermöglicht es, dass die zweite Welle 7 weiter in die erste Welle 4 eingeschoben werden kann, so dass der Hohlabschnitt 11 mit dem Zapfenabschnitt 24 eine gegenseitige Führung der Wellen 4, 7 gewährleistet (siehe Fig. 5). So wird bei einer weiteren Stauchung 21 der Wellenverbindung 1, auch wenn die formschlüssige erste Verbindung 16 nicht mehr vorliegt, weiterhin eine gegenseitige Führung der ersten Welle 4 und der zweite Welle 7 gewährleistet.

An dem zweiten Wellenende 9 der zweiten Welle 7 ist ein Gleichlaufdrehgelenk 27 angeordnet mit einem Gelenkinnenteil 28, einem Gelenkaußenteil 29 und dazwischen angeordneten Rollkörpern 30, die im Betrieb der Wellenverbindung 1 in einer Funktionslage 31 zueinander angeordnet sind. Dabei ist eine für das Lösen der Axialsicherung 18 erforderliche Auslösekraft 19 geringer ist als eine Kraft 32, die für eine Auflösung der Funktionslage 31 erforderlich ist.

Die Wellenverbindung 1 ist so ausgelegt, dass im Crash-Fall zunächst die Axialsicherung 18 gelöst wird und erst dann eine Auflösung der Funktionslage 31 des Gleichlaufdrehgelenks 27 erfolgt. Damit kann gerade bei einer Streckung 20 der Wellenverbindung 1 und auch bei einer Stauchung 21 die gegenseitige Führung der Wellen 4, 7 gewährleistet werden, ohne das die vorgesehenen Gleichlaufdrehgelenke 27 mit einer entsprechenden (größeren) Verschiebbarkeit ausgestattet sein müssen.

Die Axialsicherung 18 umfasst einen elastisch verformbaren Sicherungsring 33, der in der Ausgangslage 14 in einer, in dem Hohlabschnitt 11 angeordneten und in der Umfangsrichtung 15 umlaufend ausgeführten ersten Nut 34 und in einer, in dem Verschiebeabschnitt 13 angeordneten und in der Umfangsrichtung 15 umlaufend ausgeführten zweiten Nut 35 positioniert ist, so dass der Sicherungsring 33 in der axialen Richtung 10 eine formschlüssige zweite Verbindung 36 der ersten Welle 4 mit der zweiten Welle 7 bildet.

Der Sicherungsring 33 wird bei Montage der zweiten Welle 7 in der ersten Welle 4 in der zweiten Nut 35 angeordnet und dann mit dem Verschiebeabschnitt 13 in den Hohlabschnitt 11 eingeführt. Dabei wird der Sicherungsring 33 elastisch verformt und gleitet entlang der inneren Umfangsfläche des Hohlabschnitts 11 bis die Ausgangslage 14 erreicht ist. In dieser Position der Wellen 4, 7 zueinander verformt sich der Sicherungsring 33 zurück und ordnet sich nun zusätzlich in der ersten Nut 34 an, so dass eine formschlüssige zweite Verbindung 36 der Wellen 4, 7 gebildet ist.

Der Hohlabschnitt 11 erstreckt sich, ausgehend von dem ersten Ende 5 der ersten Welle 4 und hin zu dem zweiten Ende 6 entlang der axialen Richtung 10 von einem ersten Hohlabschnittsende 37 zu einem zweiten Hohlabschnittsende 38, wobei die erste Nut 34 an dem zweiten Hohlabschnittsende 38 angeordnet ist.

Ein Dichtring 39 ist an dem ersten Hohlabschnittsende 37 angeordnet ist, wobei der Dichtring 39 in der Ausgangslage 14 zusammen mit der zweiten Welle 7 eine Abdichtung der ersten Welle 4 bewirkt. Der Dichtring 39 ist in einer, in dem Verschiebeabschnitt 13 angeordneten dritten Nut 41 positioniert.

Die erste Welle 4 ist eine Hohlwelle mit einem sich an den Hohlabschnitt 11 anschließenden Hohlraum 42, wobei sich die zweite Welle 7 bei einer Stauchung 21 der Wellenverbindung 1 in den Hohlraum 42 hinein erstreckt (siehe Fig. 5).

Fig. 4 zeigt die Wellenverbindung 1 nach Fig. 3 in einer gegenüber der Ausgangslage 14 gestreckten Anordnung in einer Seitenansicht im Schnitt. Auf die Ausführungen zu Fig. 3 wird Bezug genommen. Im Unterschied zu Fig. 3 ist hier die Wellenverbindung 1 nach einer Streckung 20, also einer Verschiebung 17 der zweiten Welle 7 gegenüber der ersten Welle 4 und einer Verlängerung der Wellenverbindung 1, abgebildet. Die Axialsicherung 18 wurde durch eine in der axialen Richtung 10 wirkende Auslösekraft 19 gelöst und die erste Welle 4 gegenüber der zweiten Welle 7 entlang der axialen Richtung 10 verschoben. Auch bei dieser Streckung 20, ausgehend von der Ausgangslage 14 der Wellenverbindung 1, ist das erste Wellenende 8 noch in dem Hohlabschnitt 11 der ersten Welle 4 angeordnet. Dabei bildet der Hohlabschnitt 11 mit dem Verschiebeabschnitt 13 entlang der axialen Richtung 10 einen Führungsabschnitt 40 und in einer Umfangsrichtung 15 eine formschlüssige erste Verbindung 16 aus. Ausgehend von der Ausgangslage 14 ist eine Führung durch den Führungsabschnitt 40 auch noch bei der Streckung 20 der Wellenverbindung 1 gewährleistet.

Wie in Fig. 3 gezeigt weist die formschlüssige erste Verbindung 16 in der Ausgangslage 14 eine Länge 45 in der axialen Richtung 10 auf. Bei einer Streckung 20 der Wellenverbindung 1 um die Verschiebung 17 wird der Verschiebeabschnitt 13 zumindest teilweise aus dem Hohlabschnitt 11 herausbewegt. Dabei kann durch den Verschiebeabschnitt 13, der sich entlang der axialen Richtung 10 über eine größere Länge erstreckt als der Hohlabschnitt 11, auch bei einer Streckung 20 der Wellenverbindung 1 die formschlüssige erste Verbindung 16 aufrechterhalten werden. Über den Verschiebeabschnitt 13 wird gewährleistet, dass die in der Ausgangslage 14 vorliegende Länge 45 (umfasst hier auch den Sicherungsring 33) der formschlüssigen ersten Verbindung 16 auch bei einer Streckung 20 der Wellenverbindung 1 um eine Verschiebung 17, ausgehend von der Ausgangslage 14, zumindest teilweise aufrechterhalten bleibt.

Fig. 5 zeigt die Wellenverbindung 1 nach Fig. 3 in einer gegenüber der Ausgangslage 14 gestauchten Anordnung in einer Seitenansicht im Schnitt. Auf die Ausführungen zu Fig. 3 wird Bezug genommen. Im Unterschied zu Fig. 3 ist hier die Wellenverbindung 1 nach einer Stauchung 21, also einer Verschiebung 17 der zweiten Welle 7 gegenüber der ersten Welle 4 und Verkürzung der Wellenverbindung 1, abgebildet. Die Axialsicherung 18 wurde durch eine in der axialen Richtung 10 wirkende Auslösekraft 19 gelöst und die erste Welle 4 gegenüber der zweiten Welle 7 entlang der axialen Richtung 10 verschoben. Bei dieser Stauchung 20, ausgehend von der Ausgangslage 14 der Wellenverbindung 1 oder von der bereits vorher aufgetretenen Streckung 21 gemäß Fig. 4, ist das erste Wellenende 8 innerhalb des Hohlraums 42 der ersten Welle 4 und der Zapfenabschnitt 24 der zweiten Welle 7 in dem Hohlabschnitt 11 der ersten Welle 4 angeordnet.

Dabei wird die erste Welle 4 über den Hohlabschnitt 11 und den Zapfenabschnitt 24 entlang der axialen Richtung 10 geführt. Die formschlüssige erste Verbindung 16 liegt hier nicht vor. Ausgehend von der Ausgangslage 14 ist eine Führung durch das Zusammenwirken von Zapfenabschnitt 24 und Hohlabschnitt 11 auch noch bei der hier vorliegenden starken Stauchung 21 der Wellenverbindung 1 gewährleistet.

Das Crash-Verhalten der Längswellenanordnung 2 bzw. der Wellenverbindung 1 wird somit bevorzugt vorrangig durch eine Auslösekraft 19 eingestellt, bei der die Lösung der Axialsicherung 18 erfolgt und eine gegenseitige Verschiebung 17 von erster Welle 4 und zweiter Welle 7 eintritt. Im Crash-Fall, insbesondere bei Kraftfahrzeugen 3, kann so in Abhängigkeit von einer auftretenden Crash-Kraft eine definierte und vorbestimmte Verformung der Längswellenanordnung 2 eingestellt werden.

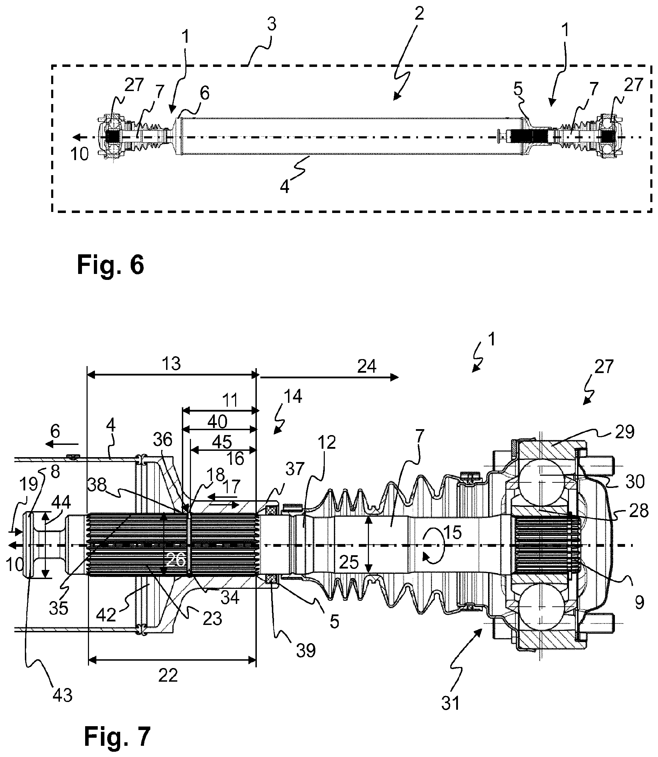

Figur 6 zeigt eine weitere Ausführungsform einer Längswellenanordnung 2 eines Kraftfahrzeugs 3. Auf die Ausführungen zu Fig. 1 wird verwiesen. Die Längswellenanordnung 2 setzt sich aus einer ersten Welle 4, die ein erstes Ende 5 und ein zweites Ende 6 aufweist, und zwei zweiten Wellen 7 zusammen, über die die Drehmomente des Antriebs des Kraftfahrzeuges 3 übertragen werden. Erste Welle 4 und zweite Welle 7 bilden jeweils eine starre Wellenverbindung 1.

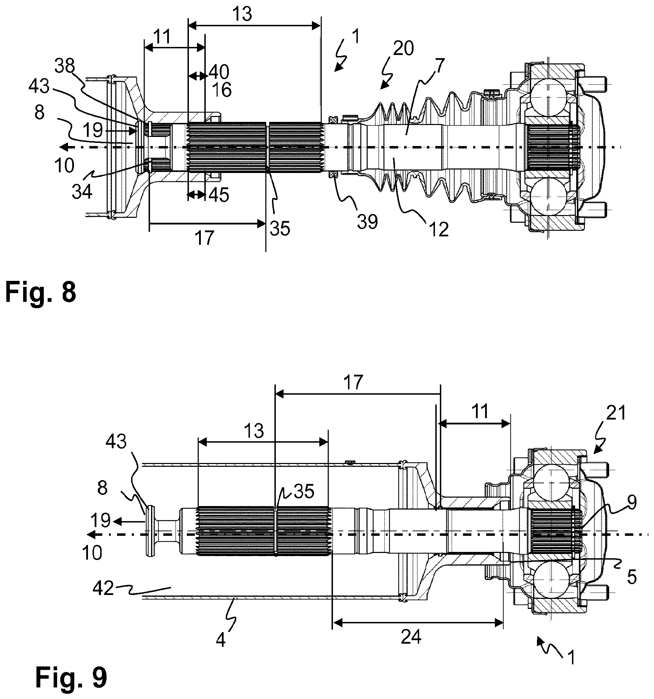

Fig. 7 zeigt die weitere Ausführungsform einer Wellenverbindung 1 gemäß Fig. 6 in einer Ausgangslage 14 in einer Seitenansicht im Schnitt. Fig. 8 zeigt die weitere Wellenverbindung 1 nach Fig. 7 in einer gegenüber der Ausgangslage 14 gestreckten Anordnung in einer Seitenansicht im Schnitt. Fig. 9 zeigt die weitere Wellenverbindung 1 nach Fig. 7 in einer gegenüber der Ausgangslage 14 gestauchten Anordnung in einer Seitenansicht im Schnitt. Die Fig. 7 bis 9 werden im Folgenden gemeinsam beschrieben. Auf die Ausführungen zu Fig. 3 bis 5 und Fig. 6 wird verwiesen.

Die Wellenverbindung 1 weist im Unterschied zur Ausführungsform gemäß Fig. 3 bis 5 an der zweiten Welle 7 im Bereich des ersten Wellenendes 8 einen Anschlag 43 auf, der mit einem zweiten Hohlabschnittsende 38 der ersten Welle 7 zur Begrenzung der gegenseitigen Verschiebung 17 bei einer Streckung 20 der Wellenverbindung zusammenwirkt (siehe Fig. 8). Wie in Fig. 3 bereits gezeigt weist die formschlüssige erste Verbindung 16 in der Ausgangslage 14 eine Länge 45 (hier wird berücksichtigt, dass der die zweite Verbindung 36 bildende Sicherungsring 33 keine in der Umfangsrichtung 15 wirkende formschlüssige erste Verbindung 16 ausbildet) in der axialen Richtung 10 auf. Bei einer Streckung 20 der Wellenverbindung 1 wird der Verschiebeabschnitt 13 zumindest teilweise aus dem Hohlabschnitt 11 herausbewegt. Dabei wird durch den Verschiebeabschnitt 13, der sich entlang der axialen Richtung 10 über eine größere Länge erstreckt als der Hohlabschnitt 11, auch bei einer Streckung 20 der Wellenverbindung 1 die formschlüssige erste Verbindung 16 aufrechterhalten. Über den Verschiebeabschnitt 13 wird gewährleistet, dass die in der Ausgangslage 14 vorliegende Länge 45 (umfasst hier nicht den Sicherungsring 33) der formschlüssigen ersten Verbindung 16 auch bei einer Streckung 20 der Wellenverbindung 1 um eine Verschiebung 17, ausgehend von der Ausgangslage 14, aufrechterhalten bleibt.

Bei einer Streckung 20 der Wellenverbindung 1 begrenzt der Anschlag 43 an der zweiten Welle 7 zusammen mit der ersten Welle 4 eine weitere Streckung 20 der Wellenverbindung 1. So kann verhindert werden, dass die zweite Welle 7 aus dem Hohlabschnitt 11 der ersten Welle 4 vollständig entfernt werden kann. Weiter wird so auch verhindert, dass die formschlüssige erste Verbindung 16 bei einer Streckung 20 (vollständig) aufgelöst werden kann.

Der Anschlag 43 wird durch einen Anschlagdurchmesser 44 gebildet, der größer ist als der kleinste Durchmesser 26 des Hohlabschnitts 11 bzw. größer ist als ein kleinster Durchmesser 26 der ersten Welle 4 im Bereich des zweiten Hohlabschnittsendes 38.
- 27: Gleichlaufdrehgelenk
- 28: Gelenkinnenteil
- 29: Gelenkaußenteil
- 30: Rollkörper
- 31: Funktionslage
- 32: Kraft
- 33: Sicherungsring
- 34: erste Nut
- 35: zweite Nut
- 36: zweite Verbindung
- 37: erstes Hohlabschnittsende
- 38: zweites Hohlabschnittsende
- 39: Dichtring
- 40: Führungsabschnitt
- 41: dritte Nut
- 42: Hohlraum
- 43: Anschlag
- 44: Anschlagdurchmesser
- 45: Länge

## Patentansprüche

1. Wellenverbindung (1) für eine Längswellenanordnung (2) eines Kraftfahrzeugs (3), zumindest aufweisend eine erste Welle (4) mit einem ersten Ende (5) und einem zweiten Ende (6) und eine koaxial zu der ersten Welle (4) angeordnete zweite Welle (7) mit einem ersten Wellenende (8) und einem zweiten Wellenende (9); wobei sich die Wellen (4, 7) entlang einer axialen Richtung (10) erstrecken; wobei das erste Ende (5) einen Hohlabschnitt (11) bildet; wobei das erste Wellenende (8) einen ersten Zapfen (12) mit einem Verschiebeabschnitt (13) bildet; wobei sich zumindest in einer Ausgangslage (14) der Wellenverbindung (1) das erste Wellenende (8) durch den Hohlabschnitt (11) hindurch erstreckt, und der Hohlabschnitt (11) mit dem Verschiebeabschnitt (13) entlang der axialen Richtung (10) einen Führungsabschnitt (40) und in einer Umfangsrichtung (15) eine formschlüssige erste Verbindung (16) ausbildet; wobei in der Ausgangslage (14) eine gegenseitige Verschiebung (17) von erster Welle (4) und zweiter Welle (7) entlang der axialen Richtung (10) durch eine Axialsicherung (18) verhindert ist; wobei in einem Crashfall die Axialsicherung (18) durch eine in der axialen Richtung (10) wirkenden Auslösekraft (19) lösbar ist und die erste Welle (4) gegenüber der zweiten Welle (7) entlang der axialen Richtung (10) verschiebbar ist; **dadurch gekennzeichnet, dass** ausgehend von der Ausgangslage (14) eine Führung durch den Führungsabschnitt (40) sowohl bei einer Streckung (20) als auch bei einer Stauchung (21) der Wellenverbindung (1) gewährleistet ist;
wobei sich der Verschiebeabschnitt (13) in der axialen Richtung (10) länger als der Hohlabschnitt (11) erstreckt, so dass zumindest bei einer Streckung der Wellenverbindung (1) der Verschiebeabschnitt (13) die in der Ausgangslage (14) vorliegende Länge der ersten Verbindung (16) gewährleistet; wobei eine Erstreckung des Verschiebeabschnitts (13) entlang der axialen Richtung mindestens 120 % der Erstreckung des Hohlabschnitts (11) beträgt.

2. Wellenverbindung (1) nach Patentanspruch 1, wobei die Axialsicherung (18) gegenüber einer Streckung (20) der Wellenverbindung (1) eine Auslösekraft (19) von höchstens 120.000 Newton aufweist.

3. Wellenverbindung (1) nach einem der vorhergehenden Patentansprüche, wobei die Axialsicherung (18) einen elastisch verformbaren Sicherungsring (33) umfasst, der in der Ausgangslage (14) in einer, in dem Hohlabschnitt (11) angeordneten ersten Nut (34) und in einer, in dem Verschiebeabschnitt (13) angeordneten zweiten Nut (35) positioniert ist, so dass der Sicherungsring (33) in der axialen Richtung (10) eine formschlüssige zweite Verbindung (36) der ersten Welle (4) mit der zweiten Welle (7) bildet.

4. Wellenverbindung (1) für eine Längswellenanordnung (2) eines Kraftfahrzeugs (3), zumindest aufweisend eine erste Welle (4) mit einem ersten Ende (5) und einem zweiten Ende (6) und eine koaxial zu der ersten Welle (4) angeordnete zweite Welle (7) mit einem ersten Wellenende (8) und einem zweiten Wellenende (9); wobei sich die Wellen (4, 7) entlang einer axialen Richtung (10) erstrecken; wobei das erste Ende (5) einen Hohlabschnitt (11) bildet; wobei das erste Wellenende (8) einen ersten Zapfen (12) mit einem Verschiebeabschnitt (13) bildet; wobei sich zumindest in einer Ausgangslage (14) der Wellenverbindung (1) das erste Wellenende (8) durch den Hohlabschnitt (11) hindurch erstreckt, und der Hohlabschnitt (11) mit dem Verschiebeabschnitt (13) entlang der axialen Richtung (10) einen Führungsabschnitt (40) und in einer Umfangsrichtung (15) eine formschlüssige erste Verbindung (16) ausbildet; wobei in der Ausgangslage (14) eine gegenseitige Verschiebung (17) von erster Welle (4) und zweiter Welle (7) entlang der axialen Richtung (10) durch eine Axialsicherung (18) verhindert ist; wobei in einem Crashfall die Axialsicherung (18) durch eine in der axialen Richtung (10) wirkenden Auslösekraft (19) lösbar ist und die erste Welle (4) gegenüber der zweiten Welle (7) entlang der axialen Richtung (10) verschiebbar ist; **dadurch gekennzeichnet, dass** ausgehend von der Ausgangslage (14) eine Führung durch den Führungsabschnitt (40) sowohl bei einer Streckung (20) als auch bei einer Stauchung (21) der Wellenverbindung (1) gewährleistet ist; wobei an dem zweiten Wellenende (9) ein Gleichlaufdrehgelenk (27) angeordnet ist mit einem Gelenkinnenteil (28), einem Gelenkaußenteil (29) und dazwischen angeordneten Rollkörpern (30), die im Betrieb der Wellenverbindung (1) in einer Funktionslage (31) zueinander angeordnet sind; wobei eine für das Lösen der Axialsicherung (18) erforderliche Auslösekraft (19) geringer ist als eine Kraft (32), die für eine Auflösung der Funktionslage (31) erforderlich ist, so dass eine Streckung der Wellenverbindung (1) erfolgt ohne dass das Gleichlaufdrehgelenk (27) beschädigt wird und seine Führungsfunktion gegenüber den Wellen verliert; wobei
die Axialsicherung (18) einen elastisch verformbaren Sicherungsring (33) umfasst, der in der Ausgangslage (14) in einer, in dem Hohlabschnitt (11) angeordneten ersten Nut (34) und in einer, in dem Verschiebeabschnitt (13) angeordneten zweiten Nut (35) positioniert ist, so dass der Sicherungsring (33) in der axialen Richtung (10) eine formschlüssige zweite Verbindung (36) der ersten Welle (4) mit der zweiten Welle (7) bildet.

5. Wellenverbindung (1) nach einem der vorhergehenden Patentansprüche 3 und 4, wobei sich der Hohlabschnitt (11), ausgehend von dem ersten Ende (5) der ersten Welle (4) und hin zu dem zweiten Ende (6) entlang der axialen Richtung (10) von einem ersten Hohlabschnittsende (37) zu einem zweiten Hohlabschnittsende (38) erstreckt und die erste Nut (34) an dem zweiten Hohlabschnittsende (38) angeordnet ist.

6. Wellenverbindung (1) nach einem der vorhergehenden Patentansprüche, wobei die zweite Welle (7) ausgehend von dem Verschiebeabschnitt (13) und hin zu dem zweiten Wellenende (9) einen sich entlang der axialen Richtung (10) erstreckenden Zapfenabschnitt (24) aufweist, wobei ein größter Durchmesser (25) des Zapfenabschnitts (24) kleiner ist als ein kleinster Durchmesser (26) des Hohlabschnitts (11).

7. Wellenverbindung (1) nach einem der vorhergehenden Patentansprüche, wobei die zweite Welle (7) im Bereich des ersten Wellenendes (8) einen Anschlag (43) aufweist, der mit der ersten Welle (4) zur Begrenzung der gegenseitigen Verschiebung (17) bei einer Streckung (20) der Wellenverbindung (1) zusammenwirkt.

8. Wellenverbindung (1) nach einem der vorhergehenden Patentansprüche, wobei, ausgehend von der Ausgangslage (14), sowohl bei der Streckung (20) als auch bei der Stauchung (21) der Wellenverbindung (1) die formschlüssige erste Verbindung (16) zumindest über einen Weg (22) von 20 Millimetern gewährleistet ist.

9. Wellenverbindung (1) nach einem der vorhergehenden Patentansprüche, wobei die formschlüssige Verbindung (16) durch eine Keilverzahnung (23) an dem Verschiebeabschnitt (13) und an dem Hohlabschnitt (11) gebildet ist.

10. Wellenverbindung (1) nach einem der vorhergehenden Patentansprüche, wobei sich der Hohlabschnitt (11), ausgehend von dem ersten Ende (5) der ersten Welle (4) und hin zu dem zweiten Ende (6) entlang der axialen Richtung (10) von einem ersten Hohlabschnittsende (37) zu einem zweiten Hohlabschnittsende (38) erstreckt und wobei ein Dichtring (39) an dem ersten Hohlabschnittsende (37) angeordnet ist, wobei der Dichtring (39) in der Ausgangslage (14) zusammen mit der zweiten Welle (7) eine Abdichtung der ersten Welle (4) bewirkt.

11. Wellenverbindung (1) nach Patentanspruch 10, wobei der Dichtring (39) in einer, in dem Verschiebeabschnitt (13) angeordneten dritten Nut (41) positioniert ist.

12. Wellenverbindung (1) nach einem der vorhergehenden Patentansprüche, wobei die Axialsicherung (18) gegenüber einer Stauchung (21) der Wellenverbindung (1) eine Auslösekraft (19) von höchstens 30.000 Newton aufweist.

13. Längswellenanordnung (2) für ein Kraftfahrzeug (3), zumindest aufweisend eine erste Welle (4) und eine zweite Welle (7), die eine Wellenverbindung (1) nach einem der vorhergehenden Patentansprüche bilden.

14. Längswellenanordnung (2) nach Patentanspruch 13, wobei die erste Welle (4) auch an dem zweiten Ende (6) über eine Wellenverbindung (1) mit einer weiteren zweiten Welle (7) verbunden ist.

## Claims

1. Shaft connection (1) for a longitudinal shaft assembly (2) of a motor vehicle (3), at least having one first shaft (4) having a first end (5) and a second end (6), and a second shaft (7), disposed so as to be coaxial with the first shaft (4), having a first shaft end (8) and a second shaft end (9); wherein the shafts (4, 7) extend along an axial direction (10); wherein the first end (5) forms a hollow portion (11); wherein the first shaft end (8) forms a first journal (12) having a displacement portion (13); wherein the first shaft end (8) at least in an initial position (14) of the shaft connection (1) extends through the hollow portion (11), and the hollow portion (11) by way of the displacement portion (13) along the axial direction (10) forms a guide portion (40) and in a circumferential direction (15) forms a form-fitting first connection (16); wherein in the initial position (14) a mutual displacement (17) of the first shaft (4) and the second shaft (7) along the axial direction (10) is prevented by an axial securing feature (18); wherein in the event of a crash the axial securing feature (18) is releasable by way of a release force (19) that acts in the axial direction (10), and the first shaft (4) is displaceable along the axial direction (10) in relation to the second shaft (7); **characterized in that**, proceeding from the initial position (14), guiding by the guide portion (40) is guaranteed in the case of an elongation (20) as well as in the case of a compression (21) of the shaft connection (1); wherein the displacement portion (13) extends in the axial direction (10) so as to be longer than the hollow portion (11) such that the displacement portion (13) at least in the case of an elongation of the shaft connection (1) can guarantee the length of the first connection (16) as provided in the initial position (14); wherein an extent of the displacement portion (13) along the axial direction is at least 120 % of the extent of the hollow portion (11).

2. Shaft connection (1) according to claim 1, wherein the axial securing feature (18) in relation to any elongation (20) of the shaft connection (1) has a release force (19) of at most 120,000 Newtons.

3. Shaft connection (1) according to one of the preceding claims, wherein the axial securing feature (18) comprises an elastically deformable securing ring (33) which in the initial position (14) is positioned in a first groove (34) that is disposed in the hollow portion (11) and in a second groove (35) that is disposed in the displacement portion (13) such that the securing ring (33) in the axial direction (10) forms a form-fitting second connection (36) of the first shaft (4) to the second shaft (7).

4. Shaft connection (1) for a longitudinal shaft assembly (2) of a motor vehicle (3), at least having one first shaft (4) having a first end (5) and a second end (6), and a second shaft (7), disposed so as to be coaxial with the first shaft (4), having a first shaft end (8) and a second shaft end (9); wherein the shafts (4, 7) extend along an axial direction (10); wherein the first end (5) forms a hollow portion (11); wherein the first shaft end (8) forms a first journal (12) having a displacement portion (13); wherein the first shaft end (8) at least in an initial position (14) of the shaft connection (1) extends through the hollow portion (11), and the hollow portion (11) by way of the displacement portion (13) along the axial direction (10) forms a guide portion (40) and in a circumferential direction (15) forms a form-fitting first connection (16); wherein in the initial position (14) a mutual displacement (17) of the first shaft (4) and the second shaft (7) along the axial direction (10) is prevented by an axial securing feature (18); wherein in the event of a crash the axial securing feature (18) is releasable by way of a release force (19) that acts in the axial direction (10), and the first shaft (4) is displaceable along the axial direction (10) in relation to the second shaft (7); **characterized in that**, proceeding from the initial position (14), guiding by the guide portion (40) is guaranteed in the case of an elongation (20) as well as in the case of a compression (21) of the shaft connection (1); wherein a constant velocity rotary joint (27) having a joint internal part (28), a joint external part (29), and roller members (30) disposed therebetween is disposed on the second shaft end (9), said roller members (30) in the operation of the shaft connection (1) being mutually disposed in a functional position (31); wherein a release force (19) required for releasing the axial securing feature (18) is lower than a force (32) which is required for releasing the functional position (31), so that an elongation of the shaft connection (1) is permitted without the constant velocity rotary joint (27) being damaged or being deprived of its guiding function in relation to the shafts; wherein the axial securing feature (18) comprises an elastically deformable securing ring (33) which in the initial position (14) is positioned in a first groove (34) that is disposed in the hollow portion (11) and in a second groove (35) that is disposed in the displacement portion (13) such that the securing ring (33) in the axial direction (10) forms a form-fitting second connection (36) of the first shaft (4) to the second shaft (7) .

5. Shaft connection (1) according to one of the preceding claims 3 and 4, wherein the hollow portion (11), proceeding from the first end (5) of the first shaft (4) and towards the second end (6), along the axial direction (10) extends from a first hollow portion end (37) to a second hollow portion end (38), and the first groove (34) is disposed on the second hollow portion end (38).

6. Shaft connection (1) according to one of the preceding claims, wherein the second shaft (7), proceeding from the displacement portion (13) towards the second shaft end (9), has a journal portion (24) that extends along the axial direction (10), wherein a largest diameter (25) of the journal portion (24) is smaller than a smallest diameter (26) of the hollow portion (11).

7. Shaft connection (1) according to one of the preceding claims, wherein the second shaft (7) in the region of the first shaft end (8) has a detent (43) which for delimiting the mutual displacement (17) in the case of an elongation (20) of the shaft connection (1) interacts with the first shaft (4).

8. Shaft connection (1) according to one of the preceding claims, wherein, proceeding from the initial position (14), the form-fitting first connection (16) in the case of an elongation (20) as well as in the case of a compression (21) of the shaft connection (1) is guaranteed at least over a distance (22) of 20 millimetres.

9. Shaft connection (1) according to one of the preceding claims, wherein the form-fitting connection (16) is formed by a spline toothing (23) on the displacement portion (13) and on the hollow portion (11).

10. Shaft connection (1) according to one of the preceding claims, wherein the hollow portion (11), proceeding from the first end (5) of the first shaft (4) and towards the second end (6), along the axial direction (10) extends from a first hollow portion end (37) to a second hollow portion end (38), and wherein an annular seal (39) is disposed on the first hollow portion end (37), wherein the annular seal (39) in the initial position (14), conjointly with the second shaft (7), effects sealing of the first shaft (4).

11. Shaft connection (1) according to claim 10, wherein the annular seal (39) is positioned in a third groove (41) that is disposed in the displacement portion (13).

12. Shaft connection (1) according to one of the preceding claims, wherein the axial securing feature (18) in relation to any compression (21) of the shaft connection (1) has a release force (19) of at most 30,000 Newtons.

13. Longitudinal shaft assembly (2) for a motor vehicle (3), at least having a first shaft (4) and a second shaft (7) which form a shaft connection (1) according to one of the preceding claims.

14. Longitudinal shaft assembly (2) according to claim 13, wherein the first shaft (4) also at the second end (6) is connected to a further second shaft (7) by way of a shaft connection (1).

## Revendications

1. Accouplement d'arbres (1) pour un ensemble d'arbres longitudinaux (2) d'un véhicule automobile (3), comprenant au moins un premier arbre (4) doté d'une première extrémité (5) et d'une deuxième extrémité (6) et un deuxième arbre (7) agencé coaxialement au premier arbre (4), doté d'une première extrémité d'arbre (8) et d'une deuxième extrémité d'arbre (9) ; les arbres (4, 7) s'étendant le long d'une direction axiale (10) ; la première extrémité (5) formant une section creuse (11) ; la première extrémité d'arbre (8) formant un premier tourillon (12) doté d'une section mobile (13) ; au moins dans un état initial (14) de l'accouplement d'arbres (1), la première extrémité d'arbre (8) s'étendant à travers la section creuse (11), et la section creuse (11) formant avec la section mobile (13) une section de guidage (40) le long de la direction axiale (10) et un premier accouplement (16) par complémentarité de forme dans une direction périphérique (15) ; un mouvement réciproque (17) du premier arbre (4) et du deuxième arbre (7) le long de la direction axiale (10) étant empêché par une fixation axiale (18) dans l'état initial (14) ; en cas de collision, la fixation axiale (18) pouvant être relâchée par une force de libération (19) agissant dans la direction axiale (10) et le premier arbre (4) étant mobile par rapport au deuxième arbre (7) le long de la direction axiale (10) ; **caractérisé en ce qu'**en partant de l'état initial (14), un guidage à travers la section de guidage (40) est assuré aussi bien lors d'un allongement (20) que lors d'une compression (21) de l'accouplement d'arbres (1) ;
la section mobile (13) s'étendant sur une plus grande longueur que la section creuse (11) dans la direction axiale (10), de telle sorte qu'au moins lors d'un allongement de l'accouplement d'arbres (1), la section mobile (13) assure la longueur du premier accouplement (16) présente dans l'état initial (14) ; une étendue de la section mobile (13) le long de la direction axiale représentant au moins 120% de l'étendue de la section creuse (11).

2. Accouplement d'arbres (1) selon la revendication 1, dans lequel la fixation axiale (18) présente par rapport à un allongement (20) de l'accouplement d'arbres (1) une force de libération (19) d'au plus 120 000 newtons.

3. Accouplement d'arbres (1) selon l'une des revendications précédentes, dans lequel la fixation axiale (18) comprend un anneau de fixation déformable élastiquement (33), qui est positionné dans l'état initial (14) dans une première rainure (34) agencée dans la section creuse (11) et dans une deuxième rainure (35) agencée dans la section mobile (13), de telle sorte que l'anneau de fixation (33) forme dans la direction axiale (10) un deuxième accouplement par complémentarité de forme (36) du premier arbre (4) avec le deuxième arbre (7).

4. Accouplement d'arbres (1) pour un ensemble d'arbres longitudinaux (2) d'un véhicule automobile (3), comprenant au moins un premier arbre (4) doté d'une première extrémité (5) et d'une deuxième extrémité (6) et un deuxième arbre (7) agencé coaxialement au premier arbre (4), doté d'une première extrémité d'arbre (8) et d'une deuxième extrémité d'arbre (9) ; les arbres (4, 7) s'étendant le long d'une direction axiale (10) ; la première extrémité (5) formant une section creuse (11) ; la première extrémité d'arbre (8) formant un premier tourillon (12) doté d'une section mobile (13) ; au moins dans un état initial (14) de l'accouplement d'arbres (1), la première extrémité d'arbre (8) s'étendant à travers la section creuse (11), et la section creuse (11) formant avec la section mobile (13) une section de guidage (40) le long de la direction axiale (10) et un premier accouplement (16) par complémentarité de forme dans une direction périphérique (15) ; un mouvement réciproque (17) du premier arbre (4) et du deuxième arbre (7) le long de la direction axiale (10) étant empêché par une fixation axiale (18) dans l'état initial (14) ; en cas de collision, la fixation axiale (18) pouvant être relâchée par une force de libération (19) agissant dans la direction axiale (10) et le premier arbre (4) étant mobile par rapport au deuxième arbre (7) le long de la direction axiale (10) ; **caractérisé en ce qu'**en partant de l'état initial (14), un guidage à travers la section de guidage (40) est assuré aussi bien lors d'un allongement (20) que lors d'une compression (21) de l'accouplement d'arbres (1) ; un joint tournant homocinétique (27) étant agencé au niveau de la deuxième extrémité d'arbre (9), doté d'une partie intérieure de joint (28), d'une partie extérieure de joint (29) et de corps de roulement (30) agencés entre elles, qui sont agencés les uns par rapport aux autres dans une position fonctionnelle (31) lors de l'exploitation de l'accouplement d'arbres (1) ; une force de libération (19) nécessaire pour le relâchement de la fixation axiale (18) étant plus faible qu'une force (32) qui est nécessaire pour un relâchement de la position fonctionnelle (31), de telle sorte qu'un allongement de l'accouplement d'arbres (1) ait lieu sans que le joint tournant homocinétique (27) ne soit endommagé et ne perde sa fonction de guidage au regard des arbres ;
la fixation axiale (18) comprenant un anneau de fixation déformable élastiquement (33), qui est positionné dans l'état initial (14) dans une première rainure (34) agencée dans la section creuse (11) et dans une deuxième rainure (35) agencée dans la section mobile (13), de telle sorte que l'anneau de fixation (33) forme dans la direction axiale (10) un deuxième accouplement par complémentarité de forme (36) du premier arbre (4) avec le deuxième arbre (7).

5. Accouplement d'arbres (1) selon l'une quelconque des revendications précédentes 3 et 4, dans lequel la section creuse (11) s'étend, en partant de la première extrémité (5) du premier arbre (4) et jusqu'à la deuxième extrémité (6) le long de la direction axiale (10), depuis une première extrémité de section creuse (37) jusqu'à une deuxième extrémité de section creuse (38), et la première rainure (34) est agencée au niveau de la deuxième extrémité de section creuse (38).

6. Accouplement d'arbres (1) selon l'une quelconque des revendications précédentes, dans lequel le deuxième arbre (7) comprend une section de tourillon (24) s'étendant le long de la direction axiale (10) en partant de la section mobile (13) et jusqu'à la deuxième extrémité d'arbre (9), un diamètre maximal (25) de la section de tourillon (24) étant inférieur à un diamètre minimal (26) de la section creuse (11).

7. Accouplement d'arbres (1) selon l'une quelconque des revendications précédentes, dans lequel le deuxième arbre (7) comprend dans la zone de la première extrémité d'arbre (8) une butée (43), qui coopère avec le premier arbre (4) pour limiter le mouvement réciproque (17) lors d'un allongement (20) de l'accouplement d'arbres (1).

8. Accouplement d'arbres (1) selon l'une quelconque des revendications précédentes, dans lequel, en partant de l'état initial (14), aussi bien lors de l'allongement (20) que lors de la compression (21) de l'accouplement d'arbres (1), le premier accouplement (16) par complémentarité de forme est assuré au moins sur une trajectoire (22) de 20 millimètres.

9. Accouplement d'arbres (1) selon l'une quelconque des revendications précédentes, dans lequel l'accouplement par complémentarité de forme (16) est formé par une cannelure (23) au niveau de la section mobile (13) et au niveau de la section creuse (11).

10. Accouplement d'arbres (1) selon l'une quelconque des revendications précédentes, dans lequel la section creuse (11) s'étend, en partant de la première extrémité (5) du premier arbre (4) et jusqu'à la deuxième extrémité (6) le long de la direction axiale (10), depuis une première extrémité de section creuse (37) jusqu'à une deuxième extrémité de section creuse (38), et dans lequel un anneau d'étanchéité (39) est agencé au niveau de la première extrémité de section creuse (37), l'anneau d'étanchéité (39) réalisant dans l'état initial (14) conjointement avec le deuxième arbre (7) une étanchéification du premier arbre (4).

11. Accouplement d'arbres (1) selon la revendication 10, dans lequel l'anneau d'étanchéité (39) est positionné dans une troisième rainure (41) agencée dans la section mobile (13).

12. Accouplement d'arbres (1) selon l'une quelconque des revendications précédentes, dans lequel la fixation axiale (18) présente par rapport à une compression (21) de l'accouplement d'arbres (1) une force de libération (19) d'au plus 30 000 newtons.

13. Ensemble d'arbres longitudinaux (2) pour un véhicule automobile (3), comprenant au moins un premier arbre (4) et un deuxième arbre (7), qui forment un accouplement d'arbres (1) selon l'une quelconque des revendications précédentes.

14. Ensemble d'arbres longitudinaux (2) selon la revendication 13, dans lequel le premier arbre (4) est également accouplé au niveau de la deuxième extrémité (6) par l'intermédiaire d'un accouplement d'arbres (1) avec un deuxième arbre supplémentaire (7).
